# EUROPÄISCHE PATENTANMELDUNG

(11) **EP 3 427 886 A1**
(43) Veröffentlichungstag der Anmeldung: **16.01.2019**
(21) Anmeldenummer: 17020496.0
(22) Anmeldetag: 26.10.2017
(51) Int. Cl.: B23K 26/12

(54) **LASERSCHWEISSEN BEI REDUZIERTEM UMGEBUNGSDRUCK**

(30) Priorität: 13.07.2017 DE 102017006648
(71) Anmelder: Linde Aktiengesellschaft, 80331 München (DE)
(72) Erfinder: Scholz, Jürgen, 81379 München (DE)

(57) **Zusammenfassung**

Die Erfindung betrifft Verfahren zum Laserschweißen bei einem Unterdruck zwischen 0,1 und 500 mbar, wobei ein Gasgemisch aus wenigstens zwei unterschiedlichen Gasen als Prozessgas verwendet wird.

## Beschreibung

Die Erfindung betrifft ein Verfahren zum Laserschweißen bei reduziertem Umgebungsdruck.

### Stand der Technik

Innerhalb der letzten Dekaden ist die Lasertechnologie zu einem in vielen Fertigungsbereichen eingesetzten Stand der Technik gereift. Laserschweißen wird dabei in sehr unterschiedlichen Industriezweigen eingesetzt, von der Mikroelektronik bis hin zum Schiffbau. Aus dem Stand der Technik sind Laserschweißverfahren bei Umgebungsdruck bekannt, bei denen eine Laserstrahlung mit einer Optik fokussiert wird. Eine Werkstückoberfläche einer Stoßkante, also der Fügestoß der zu verschweißenden Bauteile, befindet sich in der unmittelbaren Nähe des Fokus der Optik. Durch Absorption der Laserleistung erfolgt auf der Werkstückoberfläche ein Anstieg der Temperatur über die Schmelztemperatur des Metalls hinaus, so dass sich eine Schmelze bildet. Durch die hohe Abkühlgeschwindigkeit der Schweißnaht wird diese je nach Werkstoff sehr hart. Um den Vorgang des Laserschweißens zu unterstützen, wird ein Prozessgas durch eine Düse auf die Schweißstelle geleitet. Das Prozessgas bietet Schutz des erhitzten und geschmolzenen Werkstoffes gegenüber der Umgebungsatmosphäre und hat Einfluss auf die Schweißgeschwindigkeit und die mechanisch-technologischen Eigenschaften der Naht. Als weitere Aufgaben sind der Schutz der Fokussieroptiken vor Dämpfen und Schweißspritzern sowie die Kontrolle einer etwaigen Plasmawolke zu nennen.

Die Atmosphäre am Schmelzbad hat entscheidenden Einfluss auf das Schweißergebnis und ist nutzbar, um die Nahteigenschaften zu beeinflussen. Das chemische Verhalten und die physikalischen Eigenschaften von Gasen sind ebenso verschieden wie ihre Eignung als Prozessgas für unterschiedliche Schweißaufgaben. Dabei sind zwei entscheidende Kriterien zu berücksichtigen: Der Einfluss auf die mechanisch-technologischen Eigenschaften des Werkstoffs und die Schutz- bzw. Abdeckwirkung.

In vielen Fällen soll eine Reaktion von Gasen mit dem Werkstoff durch den Einsatz inerter Gase ausgeschlossen werden. Ar und He sind inert und reagieren nicht mit geschmolzenem Material. Kohlendioxid und Stickstoff beispielsweise sind aktive Gase und können im Schweißbereich Oxide, Karbide und Nitride mit dem Werkstoff bilden oder Poren verursachen. Die mechanisch-technologischen Eigenschaften des Werkstoffs werden dadurch verändert, sodass N2 und CO2 bei vielen Anwendungen als reine Prozessgase ungeeignet sind.

Es gibt aber auch Schweißaufgaben, bei denen reaktive Gase positiven Einfluss auf die metallurgischen Eigenschaften der Schweißnaht nehmen. Beispielsweise zur Aufnitrierung bei der Verwendung von N2 oder Erhöhung des Kohlenstoffanteils bei der Verwendung von CO₂. Auch andere molekulare Gase, wie Sauerstoff und Wasserstoff finden ihren Einsatz in Prozessgasgemischen zum Laserschweißen, indem sie beispielsweise die Oberflächenspannung verändern, die Einkopplung der Laserstrahlung beeinflussen oder reduzierende Wirkung entfalten. Auch der Energieübertrag im Schweißprozess durch Dissoziation und anschließende Rekombination kann zur Prozessoptimierung beitragen.

Für einen effektiven Schutz des Schweißbereichs ist die Dichte des Prozessgases wichtig. He z.B. steigt in normaler Atmosphäre nach Austritt aus der Prozessgasdüse auf. Ein gerichteter He-Fluss hoher Geschwindigkeit (kleine Düse, großer Druck) oder große He-Menge (große Düse, kleiner Druck) ist dann für einen effektiven Schutz nötig. Allerdings birgt eine hohe Strömungsgeschwindigkeit die Gefahr der Verwirbelung mit Luft bzw. einer negativen Beeinflussung der Schmelze. Ar auf der anderen Seite weist eine relativ hohe Dichte auf und ist sehr gut geeignet, die Luft aus dem Nahtbereich (Wannenlage) zu verdrängen. He-Ar-Gemische verbinden die Vorteile beider Gase, die höhere Dichte von Ar und das höhere lonisierungspotenzial von He. Sie sind damit zum Schutz der Schweißnaht beim Schweißen mit entsprechend hoher Intensität, die zur Bildung einer Plasmawolke führen würde, besonders geeignet.

Weiterhin ist in letzter Zeit das Laserschweißen im Unterdruck unter 1 bar entwickelt worden. Ab 2009 wurde das Laserstrahlschweißen im Grob- und Feinvakuum mit modernen Festkörper-Laserstrahlquellen als Alternative zum Elektronenstrahlschweißen im Vakuum zu einem einsatzfähigen Fügeverfahren für breite Anwendungsbereiche - vom Mikroschweißen mit höchster Nahtqualität und erhöhten Anforderungen an Hochvakuumdichtheit über Schweißnähte an hochbelasteten Getriebebauteilen bis hin zum Schweißen an dicken Blechen - entwickelt. Laserschweißen im Unterdruck zeichnet sich durch eine Reihe von Vorteilen aus: Bei gleicher Laserleistung wird die erzielbare Schweißtiefe gegenüber dem Schweißen bei normalem Umgebungsdruck ungefähr verdoppelt. Außerdem wird die Nahtform deutlich parallelflankiger. Durch den Unterdruck erübrigt sich die Verwendung von Prozessgas und die Schmelze kann besser entgasen. Hierdurch wird die Porenhäufigkeit reduziert. Alle Einflüsse begünstigen somit eine Verbesserung der Qualität der Schweißnaht. Es zeigte sich, dass durch eine Reduzierung des Arbeitsdrucks auf einen Bereich von 50 bis 10⁻¹mbar der Laserstrahlschweißprozess deutlich an Stabilität sowie Einschweißtiefe gewinnt und die Spritzerneigung deutlich abnimmt. Die deutlich sichtbare Verringerung der leuchtenden Metalldampffackel mit sinkendem Arbeitsdruck ist das augenfälligste Merkmal des Laserstrahlschweißens im Vakuum; dies alleine kann aber nicht die signifikante Steigerung der Einschweißtiefe erklären.

Die Haupteffekte des verringerten Arbeitsdrucks im Laserstrahlschweißprozess liegen in der Verringerung der Siedetemperatur bei gleichzeitig annähernder Druckunabhängigkeit der Schmelztemperatur der gängigen Kosntruktionswerkstoffe. Die signifikante Verringerung der Siedetemperatur bewirkt eine deutliche Verringerung der notwendigen Energieeinbringung zur Ausbildung und Aufrechterhaltung einer Dampfkapillare. So kann mehr Energie in Einschweißtiefe überführt werden. Zusammen mit der weitgehenden Druckunabhängigkeit der Schmelztemperatur verkleinert sich das Temperaturintervall im Schmelzmantel um die Dampfkapillare. Die Dicke des Schmelzmantels muss sich durch die geringeren Temperaturen an der Grenzfläche Metalldampf/Schmelzbad in Vakuum geringer ausbilden. Dies erklärt die gesteigerte Stabilität des gesamten Schweißprozesses.

Jedoch verbleibt auch beim Laserschweißen mit Lasern der Wellenlänge im Bereich von 0,1-6 µm im Grobvakuum noch ein Rest Luft. Dieser wirkt auch im Vakuum als Prozessgas. Es besteht zwar keine Gasströmung, aber es findet eine Interaktion zwischen der Restatmosphäre und dem aufgeschmolzenen Material statt.

Somit ist es Aufgabe der vorliegenden Erfindung, das Laserschweißen im Unterdruck zu verbessern.

### Offenbarung der Erfindung

Die Erfindung schlägt ein Verfahren zum Laserschweißen nach dem unabhängigen Anspruch 1 vor. Vorteilhafte Ausgestalungen ergeben sich aus den jeweiligen Unteransprüchen und der nachfolgenden Beschreibung.

### Vorteile der Erfindung

Erfindungsgemäß wird ein Verfahren zum Laserschweißen bei einem Unterdruck zwischen 0,1 und 500 mbar vorgeschlagen, wobei ein Gasgemisch aus wenigstens zwei unterschiedlichen Gasen als Prozessgas verwendet wird.

Das erfindungsgemäße Verfahren verbindet die Vorteile des Laserschweißens bei Umgebungsdruck, bei dem verschiedene Gemische als Prozessgase verwendet werden, mit den Vorteilen des Laserschweißens bei einem Unterdruck. Durch die Verwendung von Gasgemischen beim Laserschweißen im Unterdruck zwischen 0,1 und 500 mbar können folgende zusätzliche Effekte erzielt werden:
- Beeinflussung der Wärmeableitung aus der Schmelze bzw. dem Bauteil
- Einflussnahme auf die Viskosität der Schmelze
- Vermeidung und Verminderung von Oxidation
- Einflussnahme auf die Metallurgie der Schmelze (z.B. Vermeidung von Entstickung)

In einer vorteilhaften Ausführungsform ist jeweils ein Gas mit mindestens 2% im Gasgemisch vertreten, bevorzugt mit mindestens 4%, besonders bevorzugt mit mindestens 5%. Da bei einem Unterdruck/Vakuum im Bereich von 0,1 bis 500 mbar die Anzahl an Gasmolekülen im Bereich der Schweißzone deutlich geringer ist als bei Atmosphärendruck, kann/muss je nach gewünschtem Ergebnis die Beimischkomponente mit einem höheren Anteil im Gasgemisch vorliegen, als dies häufig bei Schweißschutzgasen der Fall ist. Da bereits beim Laserschweißen unter Umgebungsdruck Beimengungen unter 1-2% in der Regel wenig Effekt zeigen, sollte diese Grenze bei Unterdruck zu höheren Werten verschoben werden.

In einer weiteren vorteilhaften Ausführungsform sind die Gase des Gasgemisches aus den Gasen Argon, Helium, Stickstoff, Sauerstoff, Kohlendioxid und/oder Wasserstoff ausgewählt. Hierbei sei auf die im einleitenden Teil genannten Zusammensetzungen und Eigenschaften der Prozessgase bei Laserschweißverfahren bei Umgebungsdruck verwiesen. Zweistoffgemische und Dreistoffgemische wie eine Mischung aus Helium und Argon, eine Mischung aus Helium, Argon und Stickstoff, eine Mischung aus Helium, Argon und Sauerstoff, eine Mischung aus Helium, Argon und Kohlendioxid und eine Mischung aus Helium, Argon und Wasserstoff sind besonders gut geeignet.

In einer weiteren vorteilhaften Ausführungsform liegt der Anteil eines Gases im Bereich von 2-50%, bevorzugt im Bereich von 10-40%. Dies ist insbesondere bei Zwei-GasGemischen vorteilhaft, da beide Gase auf diese Weise ihre Wirkung voll entfalten können. Bei Mehrstoffgemischen ist jede beliebige Zusammensetzung denkbar.

In einer weiteren vorteilhaften Ausführungsform erfolgt das Laserschweißen bei Lasern einer Wellenlänge im Bereich von 0,1 bis 6 µm.

Vorzugsweise werden für das Verfahren Faser- oder Scheibenlaser verwendet. Es sind aber auch Diodenlaser oder CO-Laser denkbar.

Vorteilhaft werden mit dem erfindungsgemäßen Verfahren Stähle, Aluminium und Buntmetalle geschweißt, was aber nicht beschränkend auszulegen ist. So ist auch jedes andere schweißbare Material denkbar.

Weitere Vorteile und Ausgestaltungen der Erfindung ergeben sich aus der Beschreibung und der beiliegenden Zeichnung.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der Erfindung zu verlassen.
Die Erfindung ist anhand eines Ausführungsbeispiels in der Zeichnung schematisch dargestellt und wird im Folgenden unter Bezugnahme auf die Zeichnung beschrieben.

### Kurze Beschreibung der Zeichnung

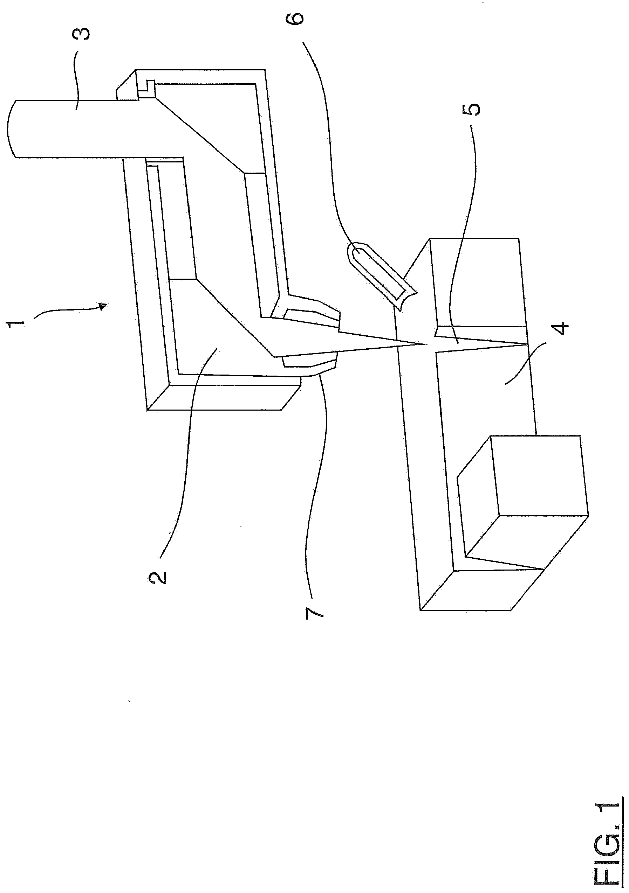

- Fig. 1: zeigt eine Anordnung zur Durchführung eines erfindungsgemäßen Verfahrens

### Ausführliche Figurenbeschreibung

Figur 1 zeigt einen Laserschweiß-Aufbau 1 für ein Laserschweißverfahren. Er umfasst eine Fokussieroptik 2, mittels der ein Laserstrahl 3 auf einem Werkstück 4 fokussiert wird. Die Optik 2 ist durch eine Schutzdüse 7 vor Schweißspritzern geschützt. Das Material des Werkstückes 4 schmilzt auf und bildet eine Schmelze 5 aus geschmolzenem Werkstoff aus. Mittels einer Düse 6 wird Prozessgas auf die Schweißstelle geleitet. Der gesamte Aufbau befindet sich in einer Vakuumkammer (nicht gezeigt).

## Patentansprüche

1. Verfahren zum Laserschweißen bei einem Unterdruck zwischen 0,1 und 500 mbar, wobei ein Gasgemisch aus wenigstens zwei unterschiedlichen Gasen als Prozessgas verwendet wird.

2. Verfahren zum Laserschweißen nach Anspruch 1, wobei jeweils ein Gas mit mindestens 2 % im Gasgemisch vertreten ist.

3. Verfahren nach einem der vorstehenden Ansprüche, wobei die Gase des Gasgemischs aus den Gasen Argon, Helium, Stickstoff, Sauerstoff, Kohlendioxid und/oder Wasserstoff ausgewählt werden.

4. Verfahren nach einem der vorstehenden Ansprüche, wobei das Gasgemisch ein Zweistoffgemisch ist.

5. Verfahren nach Anspruch 4, wobei der Anteil eines Gases im Bereich von 2-50%, bevorzugt im Bereich von 10-40%, liegt.

6. Verfahren nach einem der vorstehenden Ansprüche, wobei das Laserschweißen mit Lasern einer Wellenlänge im Bereich von 0,1 bis 6 µm erfolgt.
